# EUROPEAN PATENT APPLICATION

(11) **EP 1 594 136 A2**
(43) Date of publication of application: **09.11.2005**
(21) Application number: 05103669.7
(22) Date of filing: 03.05.2005
(51) Int. Cl.: G11B 23/04

(54) **Wireless cassette adapter**

(30) Priority: 03.05.2004 US 838286
(71) Applicant: MICROSOFT CORPORATION, Redmond, WA 98052 (US)
(72) Inventor: Falcon, Stephen R., Redmond, WA Washington 98052 (US)
(74) Representative: Grünecker, Kinkeldey, Stockmair & Schwanhäusser Anwaltssozietät

(57) **Abstract**

A wireless cassette adapter in the form of an audio cassette that can be inserted into an audio cassette player provides an audio interface for wireless mobile devices to existing audio systems. A wireless interface is established by the wireless cassette adapter to one or more wireless mobile devices and receives audio (including voice) data from the wireless mobile devices. The cassette adapter processes the audio data and transfers the data in analog format to the cassette player which is connected to an existing audio system which plays audio data from the wireless mobile device. Furthermore, the cassette adapter receives voiceinput that is transmitted to the wireless mobile device as part of a telephone call or in performance of voice recognition performed at the wireless mobile device.

## Description

### TECHNICAL FIELD

This invention relates to audio adapters which wirelessly connect to and communicate with mobile audio devices, and provide the mobile audio devices an interface to audio systems. More particularly, this invention relates to cassette audio adapters received by cassette players which wirelessly connect to wireless enabled mobile audio devices.

### BACKGROUND

Mobile devices such as cellular telephones, laptop computers, MP3 players, and DVD/CD players are usually equipped with built-in speakers to output audio sound. Typically, such built-in speakers are small and provide relatively low fidelity monaural sound. Furthermore, the sound from such built-in speakers has limited volume resulting in the ability to sometimes adequately hear the audio output from the mobile devices.

In contrast to the low volume, low fidelity audio provided by mobile devices, audio systems, such as those found in automobiles, provide high fidelity multichannel (e.g., stereo) sound. Such audio systems may include multiple speakers, amplifying circuitry, sound equalization, and volume control. These audio systems are usually hard-wired systems without a wireless interface to other devices. In other words, unless a connection for a device is provided, such as a hard-wired cradle for a wireless device, devices are not connected to and can not make use of such audio systems. Therefore, unless an interface is provided for a mobile device, the mobile device can not make use of (i.e., provide audio to) a pre-existing audio system.

Operation of a mobile device, such as a cellular phone, in an automobile can be cumbersome, if not dangerous. Current solutions include "hands free" kits that provide a hard-wire interface to a cradle holding the cellular telephone. A "hands free" kit and its interface may or may not make use of an automobile's audio system. Such "hands free" kits use device specific hardware (e.g., cradles) that supports particular devices (e.g., cellular telephones). Typically, other devices (or cellular telephones) are not supported by a device specific "hands free" kit. Therefore, multiple kits may be needed to support multiple devices (or multiple cellular telephones). Furthermore, "hands free" kits make use of extraneous cables and cradle hardware that take up space and may get in the way.

Certain devices such as MP3 players, CD players, and digital recorders, may provide for menu functions that include play back, reverse, and fast forward. Typically a user directly operates such functions through the particular device. This can be a cumbersome operation, especially when driving an automobile. Cassette players that are part of an audio system such as an audio system in an automobile provide for manual interfaces (e.g., buttons) that provide for instructions to play back, reverse, and fast forward. Although a "hands free" kit or other solution may provide an interface for a device to an audio system, they do not provide that the controls initiated from the cassette player may be conveyed to wireless mobile devices.

When operating a device using a "hands free" kit, a user may be forced to choose operation of the device or listening to a radio that is part of the automobile audio system. As an example, a user may have to turn off (i.e., switch from) the radio in order to operate a cellular telephone. In other cases, when the user is listening to the radio, an incoming call may be missed from a cellular telephone connected by a "hands free kit" if the user is listening to the automobile radio.

### SUMMARY

A wireless cassette adapter in the form of an audio cassette provides an audio interface for wireless mobile devices to existing audio systems. The wireless cassette adapter can be inserted into a common audio cassette player. Once inserted, it establishes a wireless interface to one or more wireless mobile devices and receives audio (including voice) data from the wireless mobile devices. The cassette adapter processes the audio data and transfers the data in analog format to the cassette player which is connected to an existing audio system. Therefore, the audio data from the wireless mobile device(s) is played by the existing audio system.

Furthermore, the wireless cassette adapter may be configured to receive voice input from a user that is sent to the wireless mobile device. Such voice input includes user communication when using a cellular telephone and voice commands from the user to the wireless mobile device.

Furthermore, the wireless cassette adapter may be configured to provide instructions to the wireless mobile device by determining movement of a cassette player's take up/supply reels and capstans, and activation of a pickup head. Movement and activation (i.e., activity) are indicative of particular commands from the cassette player which are sent back to the wireless mobile device.

### BRIEF DESCRIPTION OF THE CONTENTS

The detailed description is described with reference to the accompanying figures. In the figures, the left-most digit(s) of a reference number identifies the figure in which the reference number first appears. The use of the same reference numbers in different figures indicates similar or identical items.

Fig. 1 illustrates a wireless communication system having a wireless cassette adapter that communicates with multiple wireless mobile devices and an audio system.

Fig. 2 is a block diagram of a wireless cassette adapter.

Fig. 3 is a block diagram of a wireless mobile device.

Fig. 4 is a flow diagram showing a wireless cassette adapter receiving audio data from a wireless mobile device and playing the audio data at an audio system.

Fig. 5 is a flow diagram showing a wireless cassette adapter sending voice data and/or commands to a wireless mobile device.

### DETAILED DESCRIPTION

The following disclosure describes a wireless cassette adapter implemented in a standard audio cassette form factor which can be inserted into a cassette player of an existing audio system. The wireless cassette adapter provides an interface for wireless mobile devices to transfer audio data to the audio system for playback over the audio system. Additionally, the wireless cassette adapter may receive and provide voice data to the wireless mobile devices, where voice data includes communication and commands from a user. The wireless cassette adapter is implemented to sense activation and movement (i.e., activity) of take-up and supply reels, and capstans of the cassette player which indicate particular manual instructions to play back, reverse and fast forward. Such manual instructions are conveyed back to a wireless mobile device.

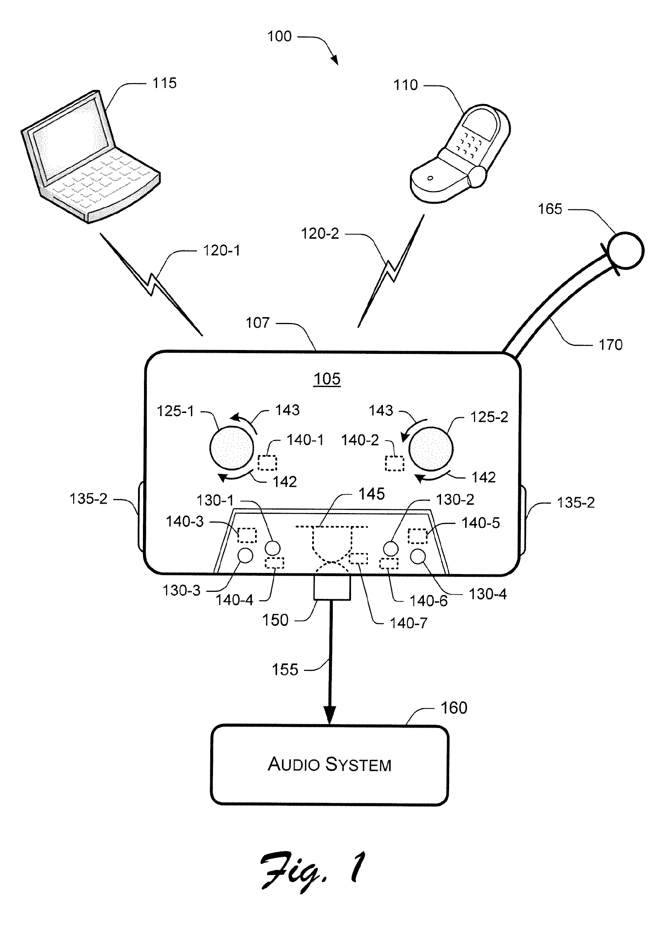

Fig. 1 shows an exemplary wireless communication system 100. It includes a wireless cassette adapter 105 that is implemented as a standard audio cassette housing 107. Housing 107 is physically sized according to a form factor of a standard audio cassette that can be received by standard audio cassette players.

Wireless cassette adapter 105 is configured with one or more wireless technologies. One example of a wireless technology is the Bluetooth technology. Other examples of wireless technologies include FM (frequency modulation), spread spectrum, and wireless proprietary protocols. Through wireless technology(ies), wireless cassette adapter 105 communicates with one or more wireless mobile devices which provide an audio output. In this example, wireless cassette adapter 105 communicates with a mobile or cellular telephone 110 and a laptop computer 115, both of which generate an audio output. Other examples of such wireless mobile devices include, but are not limited to, MP3 players, DVD/CD players, and digital recorders.

Wireless cassette adapter 105 establishes a wireless link 120-1 with laptop computer 115 and a wireless link 120-2 with cellular telephone 110. Wireless links 120 allow data to be communicated between wireless cassette adapter 105 and each of the cellular telephone 110 and laptop computer 115. Data may include audio data transmitted from cellular telephone 110 and computer laptop 115 and received at the wireless cassette adapter 105, and audio and command data transmitted from the wireless cassette adapter 105 to cellular telephone 110 and computer laptop 115.

In this implementation, wireless cassette adapter 105 is considered a "master" and wireless mobile devices (e.g., cellular telephone 110 and laptop computer 115) are considered "slaves". As a "master", wireless cassette adapter 105 determines with which "slave" to communicate. The "slaves" do not communicate with one another. In the context of Bluetooth wireless technology, a "piconet" is established between the "master" cellular telephone 105 and the "slaves" cellular telephone 110 and laptop computer 115 through wireless links 120.

As discussed above, wireless cassette adapter 105 includes a standard audio cassette housing 107 implemented in the form factor of a standard audio cassette which may be inserted into and received by a standard audio cassette player. Wireless cassette adapter 105 includes physical openings or apertures 125-1 and 125-2 to receive take up and supply reel mechanisms of a cassette player (not shown). The cassette player is a standard analog cassette player typically found in most audio systems, and particularly automobile audio systems. Furthermore, wireless cassette adapter 105 includes physical openings or apertures 130-1, 130-2, 130-3, and 130-4 to receive capstans of the cassette player. Guides 135-1 and 135-2 are included in wireless cassette adapter 105 to ease in inserting and extracting the wireless cassette adapter 105 into and out of the cassette player.

Wireless cassette adapter 105 includes transducers 140 to sense movement of the cassette player take up reel, supply reel, and capstans; and pickup head activation. Such movement and activation are indicative of manual instructions or commands initiated at the cassette player, such as a user pressing a "play" button, a "reverse" button, or a "fast forward" button on the cassette player. In particular, transducers 140-1 and 140-2 are configured to sense clockwise movement 142 and counter-clockwise movement 143 of cassette player take up and supply reels that connect with openings 125-1 and 125-2. Movement of the take up and supply reels in a particular direction (e.g., clockwise movement 142 or counter-clockwise movement 143) is indicative of forward or reverse motion as instructed by the cassette player, where forward motion includes playback. Transducers 140-3, 140-4, 140-5, and 140-6 sense activation of the cassette player's capstans which connect with openings 130-1, 130-2, 130-3, and 130-4. Activation of particular capstans is indicative of a fast forward or a reverse motion as instructed by the cassette player. Therefore, if one or more capstans are activated, transducers 140-3, 140-4, 140-5, and 140-6 sense such capstan activation. A transducer 140-7 senses activation of the cassette player's pickup head. Activation of the cassette player pickup head indicates play mode as instructed by the cassette player.

Cassette adapter 105 includes a magnetic head 145 which provides analog audio signals to a pickup head 150 of the cassette player. As discussed above, transducer 140-7 senses when pickup head 150 is activated (i.e., makes contact with magnetic head 145). When magnetic head 145 and pickup head 150 contact one another, audio signals are provided by cassette adapter 105 through a unidirectional communication (i.e., output) 155. Output 155 may represent one or more channels, and specifically stereo channels, that provide audio to an audio system 160. Audio system 160 includes automobile audio systems and home audio systems that are connected to or include the cassette player. The system 100 allows audio data output by the wireless mobile devices 110 and 115 to be sent to wireless cassette adapter 105 and played over audio system 160.

While wireless mobile devices such as cellular telephone 110 and laptop computer 115 maintain wireless connections 120 to wireless cassette adapter 105, audio data transmitted from the wireless devices is received at wireless cassette adapter 105. Wireless cassette adapter 105, as "master", determines which audio data of the wireless mobile devices to receive at any particular time. The received data is processed by the wireless cassette adapter 105 and passed on in analog format via magnetic head 145 to the cassette player pickup head 150. The audio data is then played over the audio system 160. In this manner, the audio data from the wireless mobile devices can be played over a more robust audio system than the limited speakers in such devices.

The wireless cassette adapter 105 can also be used to supply commands to the wireless mobile devices. In the event that a user activates a control on the cassette player such as a play back, fast forward, or reverse button, the cassette player's take up and supply reels, and pickup head 150 may be activated and sensed by transducers 140. When transducers 140 sense such movement or activation, cassette player 105 processes what transducers 140 sense to device commands (e.g., play back, fast forward, reverse) and passes the device commands via wireless links 120, to a particular wireless device (e.g., cellular telephone 110, laptop computer 115).

Cassette adapter 105 may further be equipped with an external microphone 165 which enables entry of voice input to wireless cassette adapter 105. Voice input to microphone 165 includes voice data (including voice commands) that are transmitted via wireless links 120 to the wireless mobile devices (e.g., telephone 110 and laptop computer 115), which may be processed into commands at the wireless mobile devices. Microphone 165 is particularly used when conducting a conversation using cellular telephone 110. A microphone boom 170 may be provided and microphone 165 is mounted at a distal end of microphone boom 170. Microphone boom 170 has sufficient length to place microphone 165 away from extraneous noise, such as cassette player motor and reel noise which may affect voice input.

The microphone 165 allows the user to input voice data to the wireless mobile devices. Microphone 165 receives the user's voice input and passes it via wireless link 120-2 to cellular telephone 110. In this manner, the microphone 165 is used instead of a microphone or audio pickup on cellular telephone 110 when conducting a conversation. Voice input may be transmitted and processed as commands at the wireless mobile devices. For example, when cellular telephone 110 is particularly communicated with, a voice input to call a particular telephone number is made through microphone 165. The cellular telephone is in voice recognition mode and processes the input into a command to call the particular telephone number.

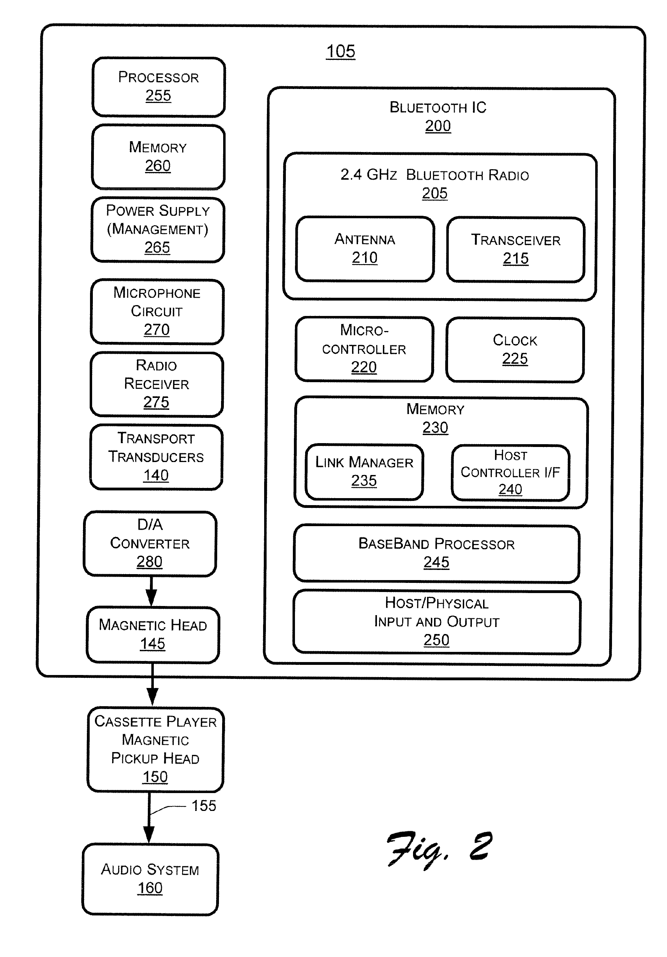

Fig. 2 shows one exemplary implementation of wireless cassette adapter 105 in more detail. As discussed above, wireless cassette adapter 105 includes one or more wireless technologies used to establish wireless links and communicate with wireless mobile devices. In this example, Bluetooth technology is described; however, it is contemplated that other wireless technologies may be used.

Wireless cassette adapter 105 includes a Bluetooth chipset or IC (integrated circuit) 220 to establish wireless communication (i.e., establish wireless links such as wireless links 120) with one or more wireless mobile devices (e.g., cellular telephone 110 and laptop computer 115). In this embodiment, Bluetooth IC 200 is a distinct hardware module integrated into wireless cassette adapter 105. As further discussed below, it will be evident that in other embodiments, the components described as part of Bluetooth IC 200 may be integrated directly as part of wireless cassette adapter 105. In other words, particular components may be separated from Bluetooth IC 200 and placed (integrated) directly onto wireless cassette adapter 105.

Bluetooth IC includes a Bluetooth radio 205 that provides a wireless interface to the wireless mobile devices. Bluetooth radio 205 operates in the 2.4 GHz ISM (industrial, scientific, and medical) frequency range. Bluetooth IC 200 is particularly used to receive, process, and transmit data (i.e., communication and instructions) to and from wireless cassette adapter 105. Wireless mobile devices such as cellular telephone 110 and laptop computer 115 transmit audio data received by Bluetooth radio 205. Bluetooth radio 205 is configured to send communication (voice data, voice commands) and instructions to the wireless mobile devices.

Radio 205 includes an antenna 210 to transmit and receive RF (radio frequency) data. In this implementation, antenna 210 is part of radio 205; however, in other implementations antenna 210 may be separate from radio 205 or separate from Bluetooth IC 200.

Radio 205 further includes a transceiver 215 which alternately transmits or receives RF data over antenna 210. Transceiver 215 includes a receiver that receives, amplifies, filters, and detects incoming RF data which includes the audio data received from the wireless mobile devices. The receiver may include an analog to digital converter (ADC) to convert received analog radio signals to digital data. Audio data received from the wireless mobile devices therefore is eventually converted to digital data for further processing. Transceiver 215 further includes a transmitter that transmits data to wireless mobile devices. The transmitter may include a digital to analog converter (DAC) to covert digital data to analog data which is transmitted as RF data.

The wireless cassette adapter 105 makes use of frequency hopping to avoid signal interference. A modulator included in the transmitter of transceiver 215 modulates analog data onto a correct hop frequency carrier in the 2.4 GHz range. The data is then transmitted through antenna 210. Transceiver 215 may further include a synthesizer that tunes the receiver and transmitter to the correct hop frequency carrier when receiving and transmitting radio signals.

Bluetooth IC 200 includes a processor or microcontroller 220 that is used to manage data within Bluetooth IC 200 and data received from and sent to cassette adapter 105. In this example, microcontroller 220 is distinct from a separate processor included in wireless cassette adapter 105 described below; however, it is contemplated that in other embodiments that a separate processor (such as described below) of wireless cassette adapter 105 may perform the functions of microcontroller 220.

Bluetooth IC 230 includes a clock 225 to support time division duplexing (TDD), which allows communication between the "master" wireless cassette adapter 105 and multiple slaves (e.g., cellular telephone 110 and laptop computer 115). TDD relies on the "master" and its "slaves" to be in clock synchronization. In other words, the clock of the "master" is synchronized with the clocks of its "slaves". Clock 225 is particularly synchronized with the clocks of the "slaves". In particular, when a Bluetooth "piconet" as described above is established connecting "master" wireless cassette adapter 105) to one or more "slaves" (e.g., telephone 110 and computer 115), the clocks of the "slaves" are synchronized with the clock 225.

Bluetooth IC 200 includes a memory module 230, which may include flash memory, RAM, and ROM. Although shown as a separate module in this example, it is contemplated that in other embodiments that memory 230 may be included in a separate memory (as described below) of wireless cassette adapter 105.

Memory 230 particularly stores a link manager 235 and a host controller interface (HCI) 240. Link manager 235 is used to link (i.e., establish communication between) wireless cassette adapter 105 to a particular device (e.g., cellular telephone 110 or laptop computer 115). HCI 240 provides instructions to link manager 235 to establish communication (i.e., link) to a device. HCI 240 may be initiated (or instructed) by an application processed by a processor on wireless cassette adapter 105.

Bluetooth IC 200 further includes a baseband processor 245 to receive and pass data packets from and to radio 205. Baseband processor 245 determines the type of data packets received and how the data packets are processed. For example, if voice data is received, in order to avoid any latency, baseband processor 245 instructs that such voice data be sent directly to an application processed by a processor (i.e., processor 255 described below, implementing a particular application) of wireless cassette adapter 105. If audio data or command data is received, baseband processor 245 may send such data (audio or command) for further processing, through link manager 235 and/or other devices and logical modules such as a logical link control and adaptation protocol (L2CAP) module (not shown). Such modules may perform data integrity evaluations for checks on data packets to assure that data is properly received. Data integrity processes are particularly performed when quality of the data packets carries significant importance over latency of received and sent data packets.

Physical input and output connections 260 connect input/output connections such as communication bus connections between Bluetooth IC 200 and other devices on wireless cassette adapter 105 such as processors and memory. Such inputs and outputs (connections) may include inputs and outputs to support the following busses: UART (universal asynchronous receiver/transmitter), RS-232, and USB (universal serial bus).

Wireless cassette adapter 105 further includes processor 255 and a memory 260 which may include random access memory (RAM), read only memory (ROM), and detachable (i.e., portable) memory. Memory 260 stores applications (i.e., programs, instructions, etc.) that are processed by processor 255. Examples of applications that may be stored in memory 260 include programs which convert transducer (e.g., transducers 140) input to commands or instructions to be performed by wireless mobile devices such as play, reverse or fast forward; and applications to process audio and digital (i.e., command) data.

A power supply management module 265 provides standalone power to wireless cassette adapter 105, and includes a battery or batteries (which may be replaceable or rechargeable). Power supply management module 265 further may include appropriate power management sub-modules or devices to regulate power. Wireless cassette adapter 105 further includes microphone circuit 270 to particularly receive and process voice input from microphone 165 shown in Fig. 1.

A radio receiver 275 may be included with wireless cassette adapter 105 to support one or more radio bands such as FM, AM, and shortwave. When activated, radio receiver 275 receives RF radio broadcasts which are eventually passed via magnetic head 145, to pickup head 150 and played on audio system 160. Radio receiver 275 may further convert received RF radio broadcasts to digital data processed by processor 255. Output from radio receiver 275 to audio system 160 may be interrupted when an overriding application occurs, such as when communication is initiated with wireless cassette adapter 105 and a device such as cellular telephone 110 of Fig. 1.

A digital to analog converter (DAC) 280 receives and transforms digital signals to analog signals that can be used by magnetic head 145. The received digital signals include audio signal data as received by the cassette adapter 105 from devices such as cellular telephone 110 and laptop computer 115 of Fig. 1. The digital signals may also include converted RF radio broadcasts as received by radio receiver 275. Magnetic head 145 and pickup head 150 establish an interface to the audio system 160. The converted analog signals are replicated at magnetic head 145 and read by the pickup head 150 of the cassette player. Pickup head 150 in turn sends the converted audio signals through output 155 to audio system 160 as described above.

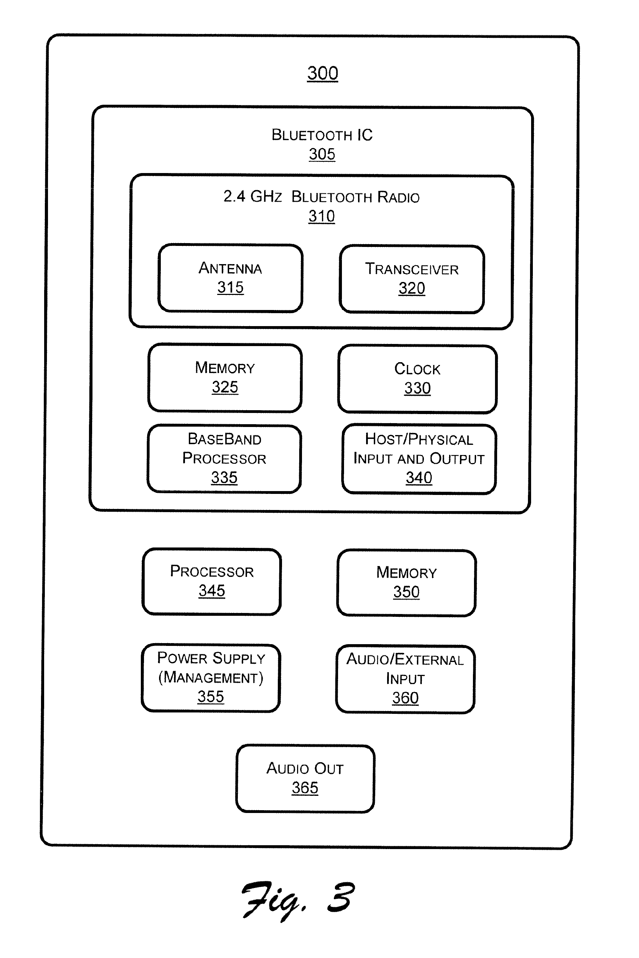

Fig. 3 illustrates an exemplary wireless mobile device 300, such as cellular telephone 110 and laptop computer 115 of Fig. 1. Wireless mobile device 300 includes a chipset or IC 305. Similar to Bluetooth IC 200 of Fig. 2 as discussed above, Bluetooth IC 305 may be also implemented in several embodiments depending on factors such as physical design considerations and cost constraints. Bluetooth technology is described in this example; however, it is contemplated that other wireless technologies may be used which allow wireless mobile device 300 to communicate with wireless cassette adapter 105.

In this embodiment, Bluetooth IC 305 includes a Bluetooth radio 310 with an antenna 315 and transceiver 330. As described above in Fig. 2, antenna 315 is similarly configured as antenna 210 and transceiver 330 is similarly configured as transceiver 215.

Bluetooth IC 305 includes a memory 330 which may include flash memory, RAM, and ROM. Memory 330 may further store a link manager and host controller interface (HCI) similar to link manager 235 and HCI 240 as described above in Fig. 2.

Bluetooth IC 305 further includes a clock 330. As a "slave" to a "master" such as wireless cassette adapter 105, clock 330 is synchronized to the clock of the master (e.g., clock 242 of Fig. 2). Clock synchronization is particularly used in determining the time slot in which wireless mobile device 300 communicates with the "master" (e.g., wireless cassette adapter 105), when multiple "slaves" are communicating with the "master".

A baseband processor 335 is included in Bluetooth IC 305. Baseband processor 335 determines the type of data packets received from wireless cassette adapter 105, and the type of data packets that are to be sent to wireless cassette adapter 105. In receiving data packets, baseband processor 335, similar to baseband processor 245 of Fig. 2 determines the type of data packet (e.g., voice data, command data, audio data, etc.) received and how the data packet is processed. The data packet is then passed on by baseband processor 335 to particular modules such as a link manager or an L2CAP as discussed above in reference to baseband processor 245 of Fig. 2.

Physical input and output connections 340 connect input/output connections such as communication bus connections between Bluetooth IC 305 and other devices on wireless mobile device 300 such as processors and memory. Such inputs and outputs (connections) may include inputs and outputs to support the following busses: UART (universal asynchronous receiver/transmitter), RS-232, and USB (universal serial bus).

Wireless mobile device 300 includes one or more processors 345, and a memory 350. Memory 350 may include RAM, ROM, and detachable (i.e., portable) memory. Memory 350 is used to store applications (i.e., programs, instructions, etc.) that are processed by processor 345. Examples of applications include voice recognition programs; playback instructions (i.e., instructions used to play, reverse, or fast forward playback menus), and particularly in the case of cellular telephones, telephone number directories.

A power supply management module 355 provides stand alone power and may include a battery or batteries (which may be replaceable or rechargeable). Power supply management module 355 further may include appropriate power management sub-modules or devices to regulate power.

Wireless mobile device 300 further includes an audio or external input module 360 to receive audio and/or voice input. Such audio and/or voice input may be processed and eventually sent as data from wireless mobile device 300 to wireless cassette adapter 105.

Wireless mobile device 300 also includes an audio output module 365 which provides audio to a built-in speaker (not shown) of the wireless mobile device 300; however, when communicating with the "master" (i.e., wireless cassette adapter 105), audio output module 265 sends audio data to Bluetooth IC 305 for processing and transmission as RF data to the "master". A switch (not shown) may be implemented to go between sending audio output data to the built-in speaker and Bluetooth IC 305.

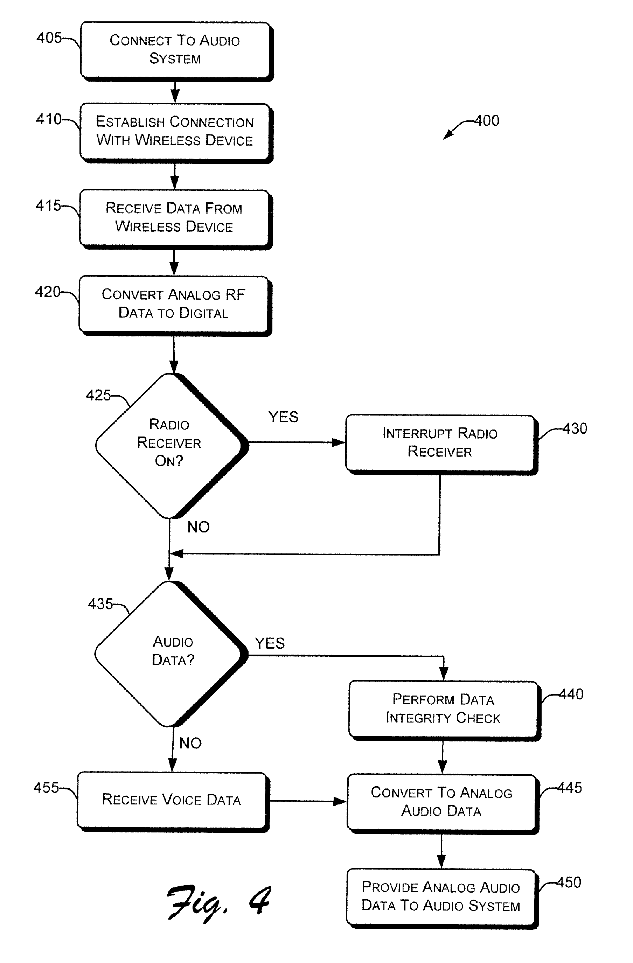

Fig. 4 shows a process 400 performed at wireless cassette adapter 105 for receiving audio data from a wireless mobile device and playing the audio data on an audio system. The process 400 is illustrated as a collection of blocks in a logical flow graph, which represent a sequence of operations that can be implemented in hardware, software, or a combination thereof. In the context of software, the blocks represent computer instructions that, when executed by one or more processors, perform the recited operations.

At block 405, the wireless cassette adapter 105 establishes a connection to the audio system. This operation is performed by insertion of the wireless cassette adapter 105 into a cassette player that is either part of or connected to the audio system such as an automobile audio system. A physical audio connection is established when a magnetic head 145 of wireless cassette adapter 105 contacts pickup head 150 of the cassette player.

At block 410, the wireless cassette adapter 105 establishes a wireless connection (e.g., wireless connections 120) with a wireless mobile device such as a cell phone, laptop computer, DVD/CD player, MP3 player, etc. The wireless connection may be initiated by wireless cassette adapter 105 transmitting radio signals to wireless mobile devices requesting a connection. Alternatively, wireless mobile devices that are looking for a connection may transmit requests to wireless cassette adapter 105 and receive a reply. Communication takes place through wireless radios (e.g., radios 230 and 310) that are included in wireless cassette adapter 105 and wireless mobile devices.

At block 415, the wireless cassette adapter 105 receives audio data from the wireless mobile device. The audio data is transmitted by the wireless mobile device and received at the cassette player as analog RF data.

At block 420, the analog RF data is converted into digital data at transceiver 215 of a radio 200 included in wireless cassette adapter 105. The digital data may be used by processor 255 of wireless cassette adapter 105.

In certain embodiments, wireless cassette adapter 105 may include a radio receiver such as radio receiver 275 described above in Fig. 2. If the wireless cassette adapter is receiving radio broadcasts (i.e., following the "YES" branch of block 425), the radio receiver is interrupted (block 430). Otherwise, if the radio receiver is not on, or a radio receiver is not provided (i.e., following the "NO" branch of block 425), a determination is made if the received data is audio data (e.g., music) to be played at the audio system (block 435). As discussed above, baseband processor 245 may be used to distinguish data packets and content and particularly determine the type of the received data whether it be music, voice, etc. For example, audio data is distinguished from voice data used in two-way conversation (i.e., communication using a cellular phone).

If a determination is made that the data is audio data (i.e., following the "YES" branch of block 435), data integrity check is performed on the audio data (block 440). This evaluation may be performed using cyclic redundant checks (CRC) or other error correcting schemes and methods on the received and converted digital audio data. The operation of block 440 may be performed by particular devices and/or software modules such as link manager 235 and/or L2CAP modules of wireless cassette adapter 105.

At block 445, the digital audio data is converted to analog data. In particular, the digital audio data is converted into analog data that can be used by magnetic head 145 or wireless cassette adapter 105 and passed on to pickup head 150 of the cassette player.

At block 450, the analog audio data (i.e., the converted digital audio data) is provided to the audio system. The analog audio data is passed from the magnetic head 145 of wireless cassette adapter 105 to the pickup head 150 of the cassette player to be played on the audio system.

If audio data is not received (i.e., following the "NO" branch of block 435), voice data is received (block 455). For example, the received voice data may be an incoming voice call through a cellular telephone. To avoid any latency, processes such as data integrity are not performed on the voice data. Instead, the voice data is sent directly to be converted into analog audio data (block 445) and transferred to and played over the audio system.

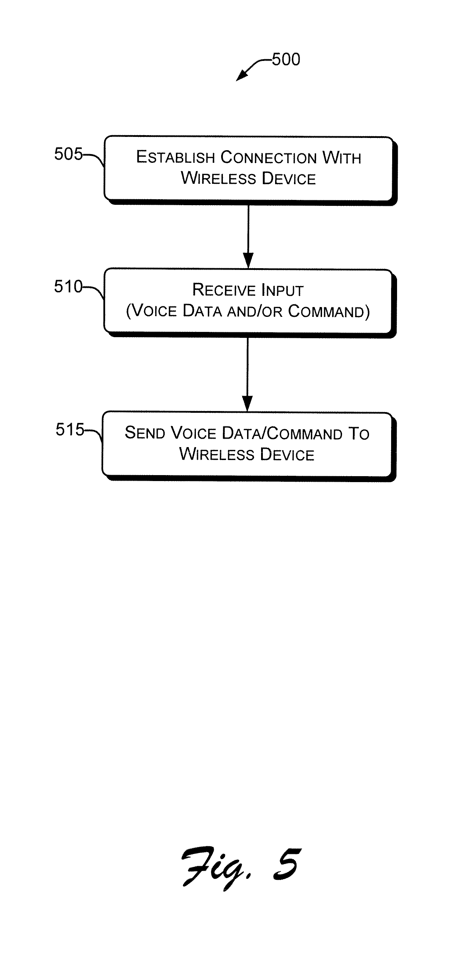

Fig. 5 shows a process 500 performed at wireless cassette adapter 105 for sending voice data and/or commands to a wireless mobile device. The process 500 is illustrated as a collection of blocks in a logical flow graph, which represent a sequence of operations that can be implemented in hardware, software, or a combination thereof. In the context of software, the blocks represent computer instructions that, when executed by one or more processors, perform the recited operations.

At block 505, the wireless cassette adapter 105 establishes a wireless connection (e.g., wireless connections 120) with a wireless mobile device such as a cell phone, laptop computer, DVD/CD player, MP3 player, etc. The wireless connection may be initiated by the wireless cassette adapter 105 by transmitting radio signals to wireless mobile devices requesting a connection. Alternatively, wireless mobile devices that are looking for a connection may transmit requests to wireless cassette adapter 105 and receive a reply. Communication takes place through a wireless interface, and specifically, wireless radios (e.g., radios 230 and 310) included in wireless cassette adapter 105 and the wireless mobile devices.

At block 510, wireless cassette adapter 105 receives an input which may be voice data from microphone 165 which are to be passed on to a wireless mobile device. The input may also be from a particular transducer or transducers that sense movement of particular reels or capstans, or activation of a pickup head of the cassette player in which the wireless cassette adapter 105 is inserted.

Movement of particular cassette player reels and capstans, and activation of the cassette player pickup head is indicative of a manual operation or control initiated at the cassette player. Examples of manual operation or control include commands to play, fast forward, and reverse. When a wireless mobile device includes provision to follow the behavior (i.e., commands representing manual instructions) initiated at the cassette player, input received from the transducers is translated into commands to be sent to the wireless mobile device to perform a particular action or actions.

At block 515, the voice data or digital command is sent to the wireless mobile device by way of radio 205 of wireless cassette adapter 105. Radio 205 converts the digital command to RF analog data transmitted by wireless links 120 that establish communications between the wireless cassette adapter 105 and the wireless mobile device.

Voice data and commands may be transmitted without noticeable latency by a user. In other words, the user experiences a "simultaneous" transmission of the voice data and commands, such that the user may provide a voice input while performing an action that initiates a transducer command.

### Conclusion

The above-described system includes a wireless cassette adapter that communicates with one or more wireless devices and allows audio from such devices to be played through an audio system. Furthermore, the wireless cassette adapter allows commands and voice data to be sent the wireless devices. Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A wireless cassette adapter comprising:
a housing physically sized in a form factor of an audio cassette;
a wireless interface resident within the housing to communicate with a wireless mobile device;
an audio system interface resident within the housing to communicate with an audio system, such that when the wireless cassette adapter is inserted into a cassette player of the audio system, audio data received by the wireless interface from the wireless mobile device is played by the audio system.

2. The wireless cassette adapter as recited in claim 1, wherein the wireless interface comprises an RF radio.

3. The wireless cassette adapter of claim 1 wherein the wireless interface uses Bluetooth wireless technology.

4. The wireless cassette adapter as recited in claim 1, wherein the audio system interface comprises a magnetic head that communicates with a pickup head of the cassette player.

5. The wireless cassette adapter as recited in claim 1 further comprising a radio receiver supporting one or more radio frequency bands to receive radio broadcasts to be passed on to the interface to the audio system, wherein the radio broadcasts are interrupted when audio is received by the wireless interface.

6. A wireless cassette adapter adapted for use with a cassette player, the cassette player having take up and supply reels and a pickup head, the wireless cassette adapter comprising:
a radio to establish a wireless connection with a wireless mobile device;
one or more transducers to sense movement and activation of the take up and supply reels and pickup head of the cassette player when the wireless cassette adapter is placed in the cassette player; and
a processor to receive input from the transducers and translate the input into commands, wherein the commands are passed to the radio and transmitted to the wireless mobile device.

7. The wireless cassette adapter as recited in claim 6, wherein the wireless mobile device uses the commands to control playback of media in the wireless mobile device and transmitted as audio to the wireless cassette adapter.

8. The wireless cassette adapter as recited in claim 6, wherein the wireless cassette adapter is in a form factor of an audio cassette.

9. The wireless cassette adapter as recited in claim 6 wherein the radio is a Bluetooth radio.

10. The wireless cassette adapter as recited in claim 6, further comprising a microphone to receive voice input from a user wherein the processor receives the voice input and converts the voice input to voice data and commands that are passed on to the radio and transmitted to the wireless mobile device.

11. The wireless cassette adapter as recited in claim 10, further comprising a baseband processor to selectively process the voice data and commands.

12. The wireless cassette adapter as recited in claim 10 wherein the microphone is mounted on a boom which places the microphone a distance from the cassette player.

13. The wireless cassette adapter as recited in claim 6, further comprising a radio receiver supporting one or more radio frequency bands to receive radio broadcasts to be passed on as analog data by the magnetic head wherein the radio broadcasts are interrupted when the radio establishes the wireless connection to the wireless mobile device.

14. A wireless cassette adapter adapted for use with a cassette player, the wireless cassette adapter comprising:
an antenna to transmit and receive RF data to and from a wireless mobile device;
a radio connected to the antenna to convert digital data to the RF data that is transmitted over the antenna, and to convert the RF data received by the antenna into digital data; and
a processor to provide digital data to the radio.

15. The wireless cassette adapter as recited in claim 14 wherein the received RF data comprises audio data of the wireless mobile device, wherein the audio data is played by an audio system connected to the cassette player.

16. The wireless cassette adapter as recited in claim 14 wherein the transmitted RF data comprises voice data and commands.

17. The wireless cassette adapter as recited in claim 14, further comprising a microphone to receive voice input from a user wherein the processor receives the voice input and converts the voice input to voice data and commands that are passed on to the radio and transmitted to the wireless mobile device.

18. The wireless cassette adapter as recited in claim 17 wherein the wireless cassette adapter transmits the voice data as part of a telephone call or in performance of voice recognition performed at the wireless mobile device.

19. A method of playing audio data of a wireless mobile device on a separate audio system having a cassette player, the method comprising:
establishing a wireless connection to the wireless mobile device which provides the audio data;
receiving the audio data from the wireless mobile device; and
converting the audio data to analog data that is transferred to the cassette player for play on the audio system.

20. The method as recited in claim 19, wherein the establishing is performed by requesting a connection to an available wireless mobile device.

21. The method as recited in claim 19, wherein the establishing and receiving are performed using Bluetooth wireless technology.

22. The method as recited in claim 19, further comprising distinguishing audio data and voice data, wherein data integrity is performed on audio data.

23. One or more computer-readable media comprising computer-executable instructions that, when executed, perform the method as recited in claim 19.

24. A method of sending data to a wireless mobile device from a cassette player, the cassette player having take up and supply reels and a pick up head, comprising:
establishing a wireless connection to the wireless mobile device;
receiving an input indicating activity of the take up and supply reels or pickup head,
converting the input into a command; and
sending the command through the wireless connection to the wireless mobile device.

25. The method as recited in claim 24, wherein the establishing is performed using Bluetooth wireless technology.

26. The method as recited in claim 24, wherein the receiving further comprises a voice input from a microphone.

27. For use with a wireless cassette adapter, a storage medium having instructions that, when executed on the wireless cassette adapter, causes the wireless cassette adapter to perform acts comprising:
interfacing to a wireless mobile device;
receiving audio data from the wireless mobile device;
converting the audio data to analog data;
passing the analog data to a pickup head of a cassette player for play on an audio system that is separate from the wireless mobile device.

28. A storage medium as recited in claim 27, wherein the connecting is performed using Bluetooth wireless technology.

29. A storage medium as recited in claim 27, furthering comprising distinguishing the audio and voice data; and processing separately the audio and voice data.

30. For use with a wireless cassette adapter, a storage medium having instructions that, when executed on the wireless cassette adapter, causes the wireless cassette adapter to perform acts comprising:
interfacing to a wireless mobile device;
receiving an input comprising voice input and transducer input related to cassette player reel movement and pickup head activation;
converting the input to digital data and commands; and
sending the digital data and commands through a wireless link to the wireless mobile device.

31. A storage medium as recited in claim 30, wherein the interfacing is performed using Bluetooth technology.
